# EUROPEAN PATENT APPLICATION

(11) **EP 4 485 481 A1**
(43) Date of publication of application: **01.01.2025**
(21) Application number: 22928808.9
(22) Date of filing: 27.06.2022
(51) Int. Cl.: G21G 1/02, G21B 3/00, G21C 1/00

(54) **POWER GENERATION SYSTEM AND POWER GENERATION METHOD**

(30) Priority: 26.02.2022 JP 2022028723
(71) Applicant: Chubu University Educational Foundation, Kasugai-shi Aichi 487-8501 (JP)
(72) Inventor: SATO, Motoyasu, Kasugai-shi, Aichi 487-8501 (JP); IIYOSHI, Atsuo, Kasugai-shi, Aichi 487-8501 (JP); KINO, Yasushi, Kasugai-shi, Aichi 487-8501 (JP); OKADA, Shinji, Kasugai-shi, Aichi 487-8501 (JP); TANAHASHI, Yoshiharu, Kasugai-shi, Aichi 487-8501 (JP)
(74) Representative: Mewburn Ellis LLP
(86) International application number: PCT/JP2022/025532
(87) International publication number: WO 2023/162286

(57) **Abstract**

[Problem] Provided are "a power generation system and a power generation method" with a novel nuclear reactor combining a unit configured to regularly generate muon-catalyzed fusion and a nuclear reactor with the thorium decay chain as a fuel.

[Solution] A power generation system S includes a muon-catalyzed fusion system S1 and a nuclear-reactor power generation system S2. The muon-catalyzed fusion system S1 is integrally formed so as to separate traffic between a fusion reactor structure S1 of the muon-catalyzed fusion system S1 and a nuclear reactor structure of the nuclear-reactor power generation system S2 via a structural partition 20, which is a pipe wall of a gas pathway, and so as to irradiate the nuclear-reactor power generation system S2 with fusion neutrons from the muon-catalyzed fusion system S1 and permeated through the structural partition 20.

## Description

### BACKGROUND OF THE INVENTION

### FIELD OF THE INVENTION

The present invention relates to a thorium power-generation system and a power generation method through the use of muon-catalyzed nuclear fusion.

### DESCRIPTION OF THE BACKGROUND ART

There has been social requirement that the use of an energy source obtained by burning a carbon source is reduced to zero by 2050. As a power generation system using a nuclear reaction, there have conventionally been proposed a nuclear fission reactor using neutrons generated by a nuclear fission reaction as well as a nuclear fusion system based upon nuclear fusion reaction (e.g., Non-Patent Document 1). The nuclear fission reactor has a defect of the accumulation of radioactive wastes, which is difficult to solve. The nuclear fusion system has a problem of a long term for development, a large system size, and rise in price.

The nuclear fission reactors having conventionally been practicalized used uranium 235. The nuclear fission of uranium 235 generates various nuclear fission substances to cause a problem of disposal. In particular, radioactive elements called "minor actinoids" are strongly radioactive substances, and many of such elements have half-lives of several tens of thousands years or longer. It has been necessary to develop a nuclear fission reactor not generating any radioactive wastes such as these minor actinoids. Further, long lived fission products (LLFP) having a lifetime longer than one million years are also generated. Such radioactive wastes have been accumulated in the last 50 years, and it has been required to shorten the lifetime thereof and reduce the volume thereof.

The nuclear reaction of thorium 232 (²³²Th) chain is represented by:
²³²Th + n → ²³³Pa → ²³³U → nuclear fission reaction with thermal neutrons, where
the generation of the minor actinoids etc. is 1/1000 to 1/100000 or less with respect to the nuclear fission of uranium 235 (²³⁵U) chain. This can remarkably reduce the problem of the nuclear wastes. More specifically, this nuclear reaction cannot produce ²³⁹Pu (plutonium 239) usable for a weapon, and is therefore limited to civilian use (Non-Patent Document 1).

Since no spontaneous fission occurs for thorium 232, it is required to cause neutrons as a trigger to enter from an outside in order to stimulate the occurrence of nuclear reaction. The advantage is high safety due to sub-criticality of a thorium nuclear fission reactor. The disadvantage is the need of uranium 235 etc., likely to cause the spontaneous fission (decay), mixed in a fuel so as to initiate the nuclear fission chain. Mixing uranium 235 had a dilemma of canceling the advantage of the thorium nuclear fission reaction not involved with the generation of any radioactive wastes.

The fission of uranium 235 generates 2.4 neutrons in average, and the neutrons collide with other uranium 235 to progress the nuclear fission reaction in an exponential manner. A state where one of neutrons from one uranium 235 collides with another uranium 235 to cause subsequent nuclear fission is referred to as "supercriticality". To prevent the supercritical state, a uranium fuel for the nuclear fission reactor is refined so as not to contain uranium 235 at a concentration of up to 7% in uranium 238 not causing nuclear fission. Among the generated neutrons, 1.4 (= 2.4-1) neutrons are absorbed with the uranium 238 etc. As a fine adjustment unit, a neutron absorber such as boron is inserted into the uranium fuel in the nuclear fission reactor so that the reactor is controlled to stably retain a critical state. Since nuclei as nuclear fission products further undergo nuclear fission according to various decay chains in the actual nuclear fission reaction, the generation of 2.4 neutrons is not simultaneous and has a considerable time-lag among them. The neutrons generated with such a time-lag are referred to as "delayed neutrons". The nuclear fission reactor provides a principal likelihood that the delayed neutrons provides a time margin therebetween long enough to control the reactor to retain the critical state.

There has been proposed a method to irradiate thorium 232 with fusion neutrons generated as a result of nuclear fusion to transmute the thorium 232 into uranium 233, and to further proceed nuclear fission (Non-Patent Documents 1 and 3). In contrast to the ²³²Th - ²³⁵U chain in which the fission of thorium 232 is triggered by neutrons generated by the nuclear fission of uranium 235, there have been devised various hybrid methods of fusion and fission (Patent Documents 2 to 4) using a trigger neutron source such as magnetic fusion in which high-temperature plasma is enclosed with magnetism (Patent Document 2) and implosion with large-output laser (Patent Document 3), or being realized by a hybrid fusion high-speed fission reactor (Patent Document 4). The study of nuclear fusion as the trigger neutron source, however, still has many problems for practical use even if the nuclear fusion reactor ITER is successful, and it is considered that the nuclear fusion cannot meet the requirement by 2050. Further, there have been concerned further increase in size of the magnetic fusion apparatus that is already large at the moment, rise in price of the facility, and rise in price of electric power. Similarly, the methods using laser, high-energy beam, and the like are still in an initial stage of principle verification.

### (Prior Art Documents)

### (Patent Documents)

Patent Document 1: International Publication No. WO 2019/168030
Patent Document 2: Japanese Unexamined Patent Application Publication No. 2008-275572
Patent Document 3: Chinese Unexamined Patent Application Publication No. 105976872
Patent Document 4: International Publication No. WO 2009/108331

### (Non-Patent Documents)

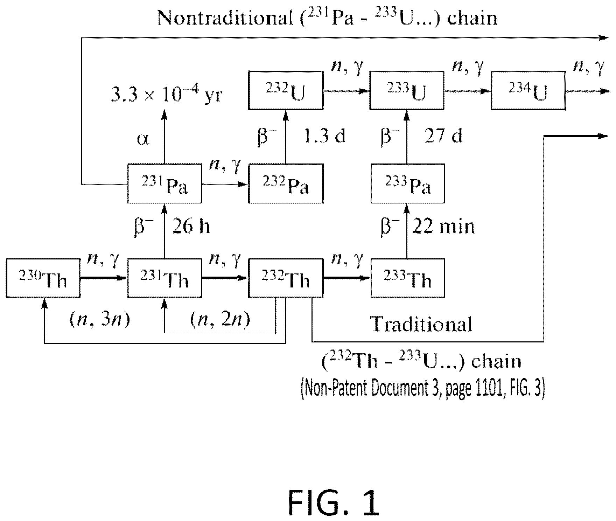

Non-Patent Document 1: Wallace Manhaimer, "Fusion breeding for mid-century, sustainable, carbon free power", Heliyon, 2020, PMID 32984613
Non-Patent Document 2: Takuma Yamashita, Yasushi Kino, Shinji Okada, and Motoyasu Sato, "Roles of resonant muonic molecule in new kinetics model and muon catalyzed fusion in compressed gas", Scientific Reports, (2022), to be published. Non-Patent Document 3: A. N. Shmelev, G. G. Kulikov, V. A. Kurnaev, G. H. Salahutdinov, E. G. Kulikov, and V. A. Apse, "Hybrid Fusion-Fission Reactor with a Thorium Blanket: Its Potential in the Fuel Cycle of Nuclear Reactors", PHYSICS OF ATOMIC NUCLEI, Vol. 78, No. 10, 2015.
Non-Patent Document 4: G. L. Olson, R. K. McCardell D. B. Ilium, "Fuel Summary Report: Shippingport Light Water Breeder Reactor", Idaho National Engineering and Environmental Laboratory Bechtel BWXT Idaho, LLC., (2002) INEEL/EXT-98-00799 Rev. 2 Non-Patent Document 5: Satoshi Chiba, Toshio Wakabayashi, Yoshiaki Tachi, Naoyuki Takaki, Atsunori Terashima, Shin Okumura, and Tadashi Yoshida, "Method to Reduce Long-lived Fission Products by Nuclear Transmutations with Fast Spectrum Reactors" Scientific Reports | (2017) 7: 13961, FIG. 1

### SUMMARY OF THE INVENTION

As a neutron source by the nuclear fusion for the nuclear fission reactor, possibility of muon-catalyzed nuclear fusion has arisen in recent years as a multi-purpose and small-sized resource. The size of a nuclear fusion reaction region is as small as that of a hen's egg in a case of deuterium-tritium fusion reaction, and as small as that of a softball in a case of deuterium-deuterium fusion reaction, both of which are extremely smaller than a plasma volume of the ITER etc., 1000 m³ (Non-Patent Document 2).

In the meantime, in Shippingport in the United States as a thorium nuclear fission reactor in a light-water reactor type, a detailed operation test had been performed for five years since 1976 (Non-Patent Document 4). Based upon the result, there had been studied the specifications required for energy consumption and breeding, and as a result, the present inventors have estimated a necessary amount of fusion neutrons based upon each set of data. The Shippingport nuclear reactor had been operated with thorium 232 as parent nucleus. The reactor was configured such that a seed blanket installed with an atomic fuel having 5.2 tons of thorium 232 as parent nucleus and 0.2 tons of uranium 233 is insertable into a cylindrically-shaped standard blanket installed with 9.6 tons of thorium 232 and 0.11 tons of uranium 233 along a center axis of the cylindrically-shaped standard blanket. The uranium 233 in the blanket undergoes nuclear fission, and neutrons generated through such nuclear fission further transmute the thorium 232 to thorium 233. That is to say, the reduction of uranium 233 consumed by the nuclear fission is compensated with thorium 233 generated through the neutron absorption or the transmutation of thorium 232, and thereby, the transmutation reaction is retained. The output is regulated with the insertion depth of the seed blanket. This nuclear fission reactor assembly resulted in operation performance of electricity output of 900,000 kWh.

The neutrons generated through the spontaneous decay of uranium 233 retain the nuclear fission reaction cycle. The present inventors have come up with the idea of a novel nuclear fission reactor having all these neutrons replaced with neutrons generated through the muon-catalyzed nuclear fusion. A necessary number of the fusion neutrons has been experientially calculated by the present inventors based upon the number of neutrons generated in the above-described seed blanket.

Firstly, a neutron flux is estimated as follows. The uranium 233 has a half-life of 160,000 years. It is assumed that the uranium 233 is linearly attenuated to 1/e in 160,000 years. The amount of uranium 233 in the above-described seed blanket is 200 kg (0.2 tons), *i.e.,* 200 kg/0.233 kg = 858 mol. The 160,000 years is equivalent to approximately 5 × 10¹² seconds. The average number of decay is, therefore, approximately 6 × 10²³ particles·mol⁻¹ × 856 mol × (1 - 1/e)/5 × 10¹² s = 6.5 × 10¹³ events·s⁻¹. These neutrons can yield power generation quantity of the above-described 900,000 kWh. It is considered by the present inventors that a neutron source by muon-catalyzed nuclear fusion is inserted into an internal space of the above-described standard blanket into which the above-described seed blanket had been inserted. From such a neutron source by the muon-catalyzed deuterium-tritium nuclear fusion, neutrons having 14.1 MeV may be radiated at 6.5 × 10¹³ events per second (events·s⁻¹).

Secondary, the number of fresh negative muons necessary to generate the above-described neutrons is calculated by the present inventors. As shown in FIG. 1, a flux of the neutrons having 14.1 MeV is multiplied by a factor of (n, 2n) and (n, 3n) reactions. The neutron multiplication is effectively at least around twice in comparison with the neutron multiplication through the nuclear fission of thorium 233 whose neutron energy is approximately 5 MeV. From results of muon-catalyzed nuclear fusion experiment having been conducted in 1980s, it was found that one fresh negative muon yields 100 neutrons. For neutrons having a flux of 3 × 10¹² events·s⁻¹ necessary to operate the thorium nuclear reactor with approximately 900,000 kWh, therefore, fresh negative muons having a flux of 3 × 10¹¹ particles·s⁻¹ are required. For a middle-scale power generation with 100,000 kWh, fresh negative muons having a flux of 3 × 10¹⁰ particles·s⁻¹ are sufficient. The generation of one muon needs the energy of approximately 5 GeV. The electric power necessary to generate fusion neutrons having the above flux through the use of muons having the above flux is 5 × 10⁹ (eV) × 1.6 × 10⁻¹⁹ (J/eV) × 3 × 10¹⁰ (s⁻¹) = 24 J/s = 24 W. In a case of deuterium-deuterium nuclear fusion, the efficiency of neutron generation decreases by a factor of 1/100, and the (n, 2n) reaction does not occur due to the energy of fusion neutrons merely as low as 2.4 MeV. In this case, the number of the fresh negative muons is needed to be 6.5 × 10¹³ particles·s⁻¹.

A composite nuclear reactor composed of a muon-catalyzed nuclear fusion reactor and a thorium-chain nuclear fission reactor can shorten the time for research and development, reduce the development cost, and further reduce the generation of minor actinoids and plutonium by a factor of 1/200 to 1/100,000, in comparison with a single nuclear fusion reactor. Such a composite nuclear reactor is a long-term energy source with the minimum loads on the natural environment and the reduced nuclear wastes, and will be an optimal fundamental technology on the 2050 problem.

The nuclear fission reactor using a neutron source for generating neutrons by some nuclear fission reaction has a problem of disposal of high-level radioactive wastes. More specifically, as a method of disposing such high-level radioactive wastes, there have been investigated geological disposal after forming glass-solidified products; however, there are still problems that the understanding of the selection of a geological disposal site has hardly been gained among the relevant parties, or the like. Further, there has been pointed an ethical problem that a substance having an extremely long half-life (*e.g.,* several millions years) is left to the future.

As another neutron source for generating neutrons without causing any nuclear fission reaction to occur, the conventional magnetic fusion using thermal equilibrium, completely ionized, and ultrahigh-temperature plasma provides a reaction cross-section as small as 1 to 5 barns with respect to the nuclear fusion reaction. Since the magnetic fusion uses a system unlikely to cause the nuclear fusion reaction to occur due to such a smaller reaction cross-section, a relative kinetic energy with respect to deuterium and tritium is needed to be as large as 20 to 100 keV for the required reaction cross-section. For this reason, a huge magnetic-field facility and vacuum chamber, etc. are needed in order to float and enclose the plasma at a high temperature in vacuum for one second or longer. Further, in the nuclear fusion reaction, a large amount of energy is released, and it is necessary to extract the released energy effectively so as to cool the apparatus. In the magnetic fusion, therefore, increase in size of the facility is required, and a special cooling method such as using a melted salt is needed. In regard to the muon-catalyzed nuclear fusion, a concept of a multipurpose and small-sized muon-catalyzed nuclear fusion reactor/neutron source to be continuously operated has been launched in recent years (Patent Document 1). Further, a theoretical study based upon the latest quantum mechanical calculation method has raised the feasibility of the muon-catalyzed nuclear fusion (Non-Patent Document 2).

### (Problems to be Solved)

In view of the above circumstances, one of the objectives of the present invention is to provide "a power generation system and a power generation method" through the use of a novel nuclear reactor obtained by combining a unit for causing the muon-catalyzed nuclear fusion to occur steadily and a reactor for causing the nuclear fission with thorium decay chain as a fuel to occur.

### (Means for Solving Problems)

In order to achieve the above-described objectives, a first aspect of the present invention is to provide a power generation system comprising: a muon-catalyzed nuclear fusion device configured to undergo muon-catalyzed nuclear fusion; and a nuclear-reactor power generation device configured such that a nuclear fuel therein is irradiated with neutrons generated as a result of muon-catalyzed nuclear fusion in the muon-catalyzed nuclear fusion device, thereby to carry out power generation, wherein a pressurized-water nuclear reaction vessel in the nuclear-reactor power generation device is arranged so as to surround a nuclear fusion reactor core in which muon-catalyzed nuclear fusion occurs via a structural partition separating the muon-catalyzed nuclear fusion device from the nuclear-reactor power generation device.

A second aspect of the present invention is to provide the power generation system in the above-described first aspect, wherein the nuclear fuel includes thorium 232 (²³²Th), thorium oxide (²³²ThO₂), or a mixture of thorium 232 and thorium oxide.

A third aspect of the present invention is to provide the power generation system in the above-described first or second aspect, wherein the nuclear-reactor power generation device includes a fuel-holding portion, arranged so as to surround the nuclear fusion reactor core, for holding the nuclear fuel irradiated with fast neutrons emitted as a result of muon-catalyzed nuclear fusion thereby to undergo a nuclear fission reaction.

A fourth aspect of the present invention is to provide the power generation system in the above-described third aspect, wherein the fuel-holding portion includes an assembly of fuel fine pipes for sealing the nuclear fuel molded into a pellet.

A fifth aspect of the present invention is to provide the power generation system in any one of the above-described first to fourth aspects, further comprising: a long lived fission product (LLFP)-holding portion for arranging an LLFP in the pressurized-water nuclear reaction vessel.

A sixth aspect of the present invention is to provide the power generation system in any one of the above-described first to fifth aspects, wherein the muon-catalyzed nuclear fusion device includes: a muon generation unit configured to generate negative muons; a gas supply unit configured to circulate and supply deuterium gas or deuterium-tritium mixture gas as a raw material gas; and a Laval nozzle configured to accelerate the raw material gas supplied from the gas supply unit to supersonic velocity, wherein the Laval nozzle has a shock wave generator arranged thereinside to undergo collision with the raw material gas accelerated to supersonic velocity thereby to generate an oblique shock wave, the raw material gas is supplied from the gas supply unit into the Laval nozzle, then the supplied raw material gas is accelerated through the Laval nozzle to supersonic velocity, and then the accelerated raw material gas collides with the shock wave generator, and thereby the oblique shock wave is generated, the oblique shock wave is converged on a center axis of the Laval nozzle so as to retain a high-density gas target in a gas phase, and the negative muons are introduced from the muon generation unit into the high-density gas target thereby to cause a nuclear fusion reaction to occur.

A seventh aspect of the present invention is to provide a power generation method comprising the steps of: irradiating a nuclear fuel arranged inside a pressurized-water nuclear reaction vessel in a nuclear fission reactor with neutrons generated as a result of muon-catalyzed nuclear fusion; while causing a nuclear fission reaction within the nuclear fuel to occur, thereby to carry out power generation.

An eighth aspect of the present invention is to provide the power generation method in the above-described seventh aspect, wherein the nuclear fission reaction within the nuclear fuel irradiated with neutrons is controlled by controlling the neutrons generated as a result of muon-catalyzed fusion.

### (Advantageous Effects of the Invention)

According to the above-described power generation system and power generation method as the present invention, thorium 232 as a nuclear raw material for the nuclear-reactor power generation device can be irradiated with fusion neutrons having 14.1 MeV generated as a result of muon-catalyzed deuterium-tritium nuclear fusion. In the nuclear reactor, thorium 232 initiates its decay chain mainly with (n, 2n) and (n, 3n) reactions as a non-traditional reaction chain at the trigger neutron energy is 14.1 MeV as shown in FIG. 1. On the other hand, due to the fact that the trigger neutron energy is as low as 2.4 MeV, thorium 232 initiates a pathway only with a traditional reaction chain. The use of the deuterium-tritium fusion neutrons therefore yields higher reaction efficiency. In either of the non-traditional or traditional cases, the thorium nuclear fission reactor can be in principle initiated. Such a configuration can be led to a composite power generation system obtained by combining the nuclear fusion and nuclear fission, and there can be achieved a highly-efficient, safe, and small-sized sub-critical nuclear reactor capable of generating a nuclear reactor output beyond the power of fusion neutrons without generating any radioactive wastes.

The nuclear reactor can be electrically controlled with muon-catalyzed nuclear fusion output instead of controlling mechanically a control rod or other mechanical control structures. The reactor has a fail-safe function in order to instantly terminate the muon-catalyzed nuclear fusion without any necessity to insert a control rod mechanically, in case of necessity to terminate the muon-catalyzed nuclear fusion. The power generation method with high reliability can, therefore, be achieved.

LLFP may also be arranged in the nuclear reactor and irradiated with the fast neutrons to shorten the lifetime of the LLFP.

### BRIEF DESCRIPTIONS OF THE DRAWINGS

FIG. 1 depicts a view showing nuclide transmutation pathways in fusion neutrons with thorium 233 in a ²³²Th nuclear fission reactor;
FIG. 2 depicts a schematic view showing a configuration obtained by combining a thorium 232 nuclear fission reactor with a reactor core of muon-catalyzed nuclear fusion, where F1 represents a circulation reactor for deuterium or deuterium-tritium, and F2 represents a pressurized light-water pathway;
FIG. 3 depicts schematic views showing a configuration of a muon-catalyzed fusion system, of which (A) shows schematically a major system configuration, and (B) shows schematically a shock wave generator in an enlarged manner;
FIG. 4 depicts an explanatory view showing schematically internal and whole structures of a power generation system; and
FIG. 5 depicts a schematic view showing the A - A cross section in FIG. 4.

### DESCRIPTIONS OF EMBODIMENTS OF THE INVENTION

### [CONFIGURATION OF POWER GENERATION SYSTEM]

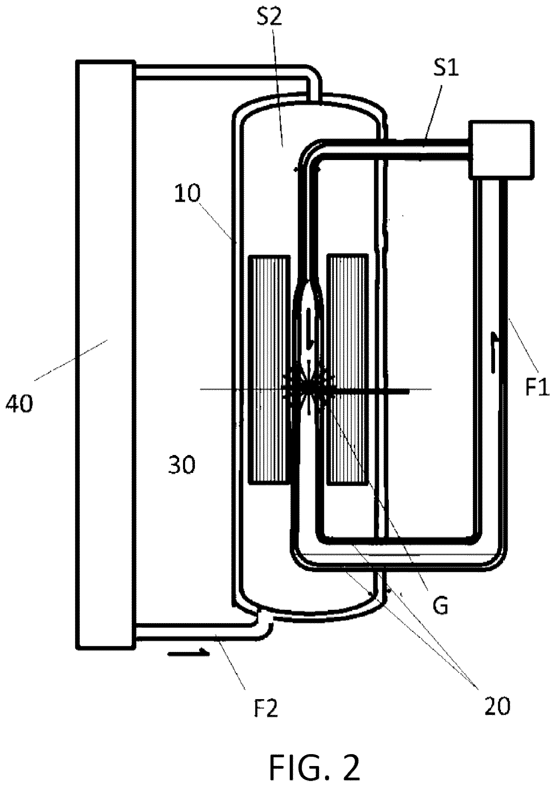

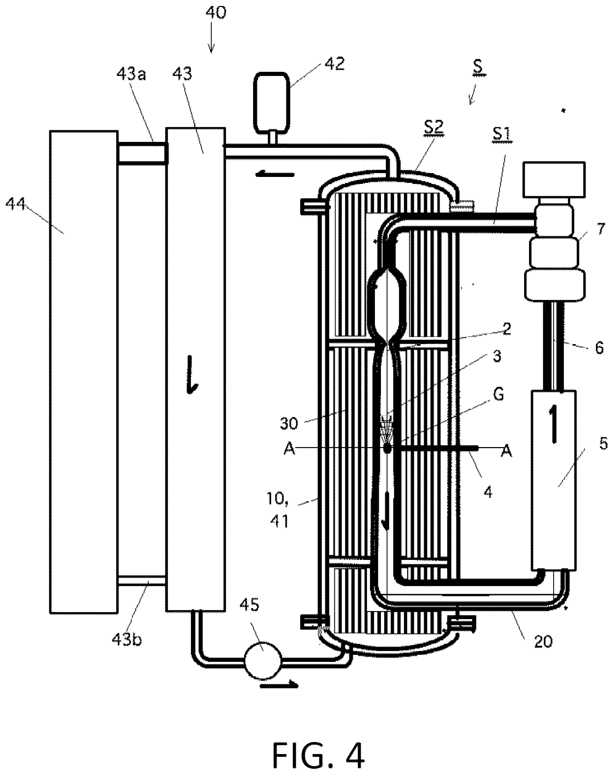

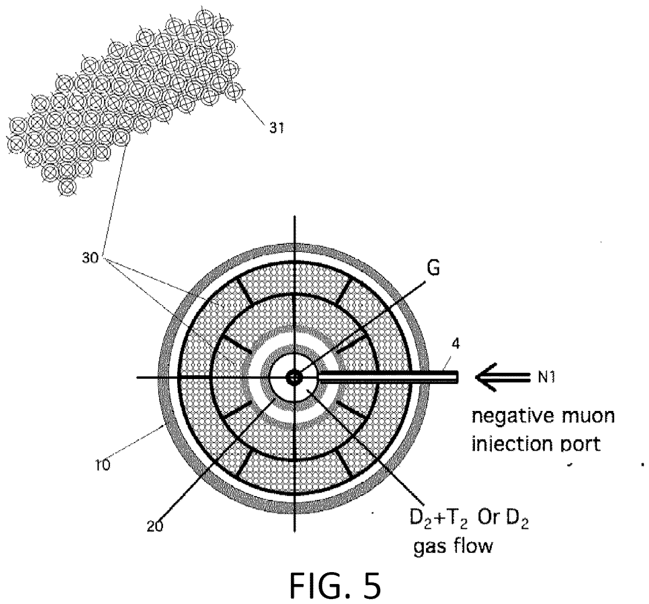

A power generation system S according to an embodiment of the present invention will be described, hereinafter, with reference to FIGS. 2 to 5.

As shown in FIG. 2, the power generation system S includes a muon-catalyzed nuclear fusion system S1 (muon-catalyzed nuclear fusion device) and a nuclear-reactor power generation system S2 (nuclear-reactor power generation device). The muon-catalyzed nuclear fusion system S1 is formed integrally with the nuclear-reactor power generation system S2 so as to separate traffic between a nuclear fusion reactor structure of the muon-catalyzed nuclear fusion system S1 and a nuclear fission reactor structure of the nuclear-reactor power generation system S2 via a structural partition 20 as a pipe wall of a gas pathway as well as so as to enable the nuclear-reactor power generation system S2 to be irradiated with fusion neutrons generated from the muon-catalyzed nuclear fusion system S1 to permeate through the structural partition 20.

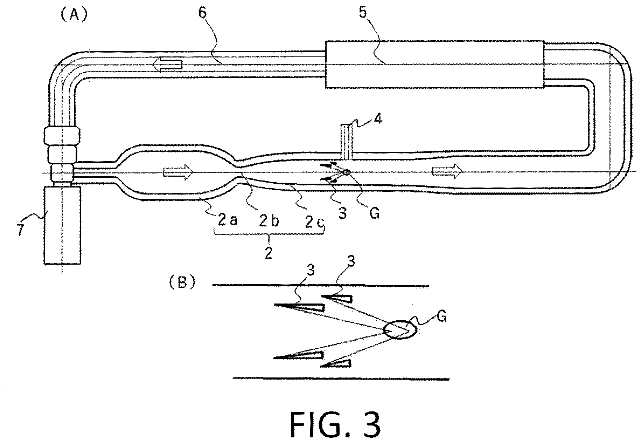

As for the muon-catalyzed nuclear fusion system S1, a configuration described in WO 2019/168030 (Patent Document 1) having been proposed by the applicant may be adopted. As shown in FIG. 3, the muon-catalyzed nuclear fusion system S1 includes a muon generation unit 1, a gas supply unit, a Laval nozzle 2, a shock wave generator 3, a muon inlet window 4, and a unit for generating a nuclear fusion reactor core G.

The muon generation unit 1 is configured to generate negative muons needed as a catalyst for the muon-catalyzed nuclear fusion reaction, and to introduce the generated negative muons into the nuclear fusion reactor core G.

The muon generation unit 1 includes a proton accelerator and a muon generator (not illustrated) configured such that a target such as Be (beryllium) is irradiated with protons so as to generate pions, and then the negative muons are generated as a result of spontaneous decay of the generated pions. As for the proton accelerator, a well-known configuration may be adopted.

The muon inlet window 4 is arranged at a position where muon beam N1 is allowed to enter the nuclear fusion reactor core G having a high-density gas target generated so as to be retained in a gas phase by the shock wave generator 3, to be described later, in the Laval nozzle 2.

The gas supply unit is configured to circulate and supply deuterium gas or deuterium-tritium mixture gas, which is a raw material gas to serve as the target of the nuclear fusion reaction. As for the gas supply unit, a well-known configuration for circulating and supplying gas may be adopted. The gas supply unit according to an embodiment of the present invention includes a circulation-gas heat exchanger 5, a circulation-gas loop 6, a high-pressure compressor 7, and auxiliary equipment such as tanks and pipes.

The Laval nozzle 2 accelerates the raw material gas supplied from the gas supply unit to supersonic velocity. The Laval nozzle 2 is connected with the high-pressure compressor 7 at an upstream side, and formed with a tubular rectification portion 2a configured to allow the raw material gas to pass therethrough at subsonic velocity, a throat portion 2b reduced in diameter in comparison with the rectification portion 2a, and a tubular reaction portion 2c connected with the throat portion 2b. The tubular reaction portion 2c larger in diameter than the throat portion 2b is formed such that the raw material gas passing therethrough at supersonic velocity undergo the nuclear fusion reaction. The Laval nozzle 2 is a part of the structural partition 20 between the nuclear-reactor power generation system S2 and the muon-catalyzed nuclear fusion system S1.

The shock wave generator 3, arranged in the reaction portion 2c of the Laval nozzle 2, is configured to collide with the raw material gas accelerated to supersonic velocity so as to generate oblique shock wave. Further, the shock wave generator 3 is arranged so as to face the supersonic gas flow. The shock wave generator 3 can generate the oblique shock wave as a result of the collision with the supersonic gas flow so as to converge the generated oblique shock wave on a center axis of the Laval nozzle 2, thereby to retain the high-density gas target of the nuclear fusion reactor core G in a gas phase. The nuclear fusion reactor core G is in an ultrahigh-density gas having 10²² particles·cm⁻³, preferably having 4 × 10²² particles·cm⁻³, at a temperature of 300 to 900 K.

The shock wave generator 3 may be configured at least such that an aerodynamic balance can be maintained with respect to a dynamic pressure, oblique shock wave, Mach shock wave, and reflective wave of the gas flow at an upstream side therefrom. The shock wave generator 3 may be formed as, *e.g.,* a pair of plate members having their respective oblique surfaces toward a downstream side while facing each other, or a plurality of small projections circularly arranged as shown in FIG. 3, etc. When the shock wave generator 3 is formed as such a plurality of small projections, a downstream end of the shock wave generator 3 can be protected from a large intensity of neutron beam and thermal flux because the downstream end can be distanced from the nuclear fusion generation region (nuclear fusion reactor core G).

The nuclear-reactor power generation system S2 includes a pressurized-water reaction vessel 10, the above-described structural partition 20, a fuel-holding portion 30, and a power generation unit 40.

The Laval nozzle 2 is arranged along a center axis inside the pressured-water reaction vessel 10. The pressurized-water reaction vessel 10 is separated from the muon-catalyzed nuclear fusion system S1 (Laval nozzle 2) via the structural partition 20, and more specifically, arranged so as to surround the nuclear fusion reactor core.

The structural partition 20 is configured to separate the above-described circulation flow tunnel system allowing the deuterium-tritium gas to flow therethrough at supersonic velocity from the below-described nuclear fission reactor filled with light water or heavy water. For such a structural partition 20 according to an embodiment of the present invention, special steel having reduced deterioration due to neutrons and reduced embrittlement due to hydrogen may be used. Such special steel has been developed for the nuclear fusion (*e.g.,* reduced activation ferric steel).

The fuel-holding portion 30 formed in a cylindrical shape as the entire appearance is arranged coaxially with respect to the Laval nozzle 2 so as to surround the nuclear fusion reactor core G undergoing the muon-catalyzed fusion in the Laval nozzle 2.

It is preferred that thorium 232 (²³²Th) in the fuel-holding portion (blanket module) be irradiated directly with fast neutrons generated by the nuclear fusion in order to proceed efficiently nuclide transmutation from thorium 232 as a nuclear fuel to uranium 233. The fuel-holding portion 30 is the blanket module, arranged so as to surround the structural partition 20, configured to hold the nuclear fuel undergoing the fission reaction while being irradiated with the fast neutrons emitted through the muon-catalyzed nuclear fusion. The fuel-holding portion 30 has both of a function as a moderation and shielding material against neutrons and a function as a converter from the neutron energy to heat.

In an embodiment according to the present invention, the fuel-holding portion 30 is configured as an assembly of fuel fine pipes (fuel rods) 31, and a large number of the fuel fine pipes 31 are arrayed concentrically as a whole. Each fuel fine pipe 31 has the nuclear fuel containing thorium 232 as a parent nuclide sealed therein, where each of a plurality of pieces of the nuclear fuel is molded in *e.g.* a pellet shape. The fuel fine pipes 31 are surrounded by a pressurized-water jacket 41 filled with pressurized light water. The pressurized-water jacket 41 recovers the energy emitted by the nuclear fission. Each of the fuel fine pipes 31 is preferably made of stainless steel or reduced activation ferric steel of high resistance against neutron irradiation.

The energy of neutrons is reduced proportionally to a distance from the center in a radial direction. The energy of neutrons in the fuel-holding portion 30 closer to an outer circumference is attenuated to an energy region of thermal neutrons. Since uranium 233 (²³³U) undergoes nuclear fission efficiently due to thermal neutrons, the outer circumferential portion becomes hotter.

Thorium 232 is transmuted to uranium 233 according to the reaction chain in FIG. 1. A level of neutron multiplication with respect to uranium 233 is obtained theoretically as being 2.38. Such a level is higher than levels for uranium 235 (²³⁵U) and plutonium 239 (²³⁹Pu) within the energy region of thermal neutrons. According to the data of the pressurized light-water breeder reactor at Shippingport, a breeding level of 1.02 was reported. For the deviation from the theoretical level, the absorption of neutrons (neutron poisoning) due to light water is the most influential. In an embodiment according to the present invention, a diameter of the fuel fine pipe 31 is set to be large enough to reduce a ratio of surface area/volume of the fuel rod, which further results in increase in consumption rate inside fuel pellet and decrease in neutron poisoning due to light water for the generated neutrons. Further, a temperature of cooling water can be raised to improve Rankine cycle efficiency of the nuclear fission reactor.

For the above-described objectives, thorium oxide (ThO₂) powder is molded and sintered to produce the pellets for the nuclear fuel. ThO₂ has a high melting point, and the sintering temperature is 2000 °C or higher. It is difficult to sinter ceramic as thick as 25 mm or more in diameter at a high temperature; nevertheless, the difficulty is solved by applying a micro-wave sintering technique as proposed in Japanese Unexamined Patent Application Publication No. 2003-277157.

As the nuclear fuel, ²³²Th (thorium 232) pellets or pellets having thorium 232 and thorium oxide are mixed may also be used.

The power generation unit 40 includes a well-known configuration of a pressurized light-water nuclear fission reactor. The power generation unit 40 includes a power generation apparatus 44 having the pressurized-water jacket 41, a pressurizer 42, a steam generator 43, a steam turbine, a power generator, a condenser, and the like, and a water-supply pump 45, or the like.

The fuel fine pipe 31 having an oxide of LLFP etc. mixed and sealed or having only LLFP sealed may also be used in addition to the nuclear fuel. In such a case, the fuel fine pipe 31 corresponds to an LLFP-holding portion. According to the configuration, LLFP can be irradiated with neutrons so that the lifetime thereof can be shortened and the amount thereof can be reduced concurrently with each other. The fuel-holding portion 30 (breeder block) may be arranged such that the breeding of neutrons and the breeding of nuclear fission substance can be maximized through the nuclear fission reactor.

The fuel fine pipes 31 having LLFP sealed therein are preferably arranged within a radius of 2/3 on an outside of several stages from an inner circumference of the fuel-holding portion 30. A ratio between the number of the fuel fine pipes 31 having the LLFP sealed therein and the number of the fuel fine pipes 31 having thorium sealed therein has a trade-off relationship with the power generation quantity (Non-Patent Document 5).

### [POWER GENERATION METHOD]

Next, the power generation method implemented through the power generation system S will be described hereinafter.

In the muon-catalyzed nuclear fusion system S1, isotropically-emitted fast neutrons having 14.1 MeV generated in the nuclear fusion reactor core G stimulate the nuclear fission reaction in the fuel-holding portion 30.

The fuel fine pipes 31 of the fuel-holding portion 30 is heated to 600 °C or higher, and cooled with circulated and pressurized primary water in the pressurized-water jacket 41. This hot thermal source heats the pressurized water in the pressurized-water jacket 41 to 500 °C or higher, and introduces this hot primary water into the steam generator 43 so as to generate hot steam. The steam is supplied from the steam generator 43 through a steam-supply pipe 43a to the power generation apparatus 44, and the power generation apparatus 44 can perform the turbine power generation. A water pipe 43b is added to this configuration so as to form a secondary loop. The circulated and pressurized primary water is circulated with the water-supply pump 45.

### With the circulation-gas heat exchanger 5, helium gas is heated to be usable for direct hydrogen production at high temperature.

### [EFFECTS OF EMBODIMENT]

According to the power generation system S and the power generation method in an embodiment of the present invention, neutrons generated in the muon-catalyzed nuclear fusion system S1 can be used to operate the nuclear-reactor power generation system S2. The fusion neutrons having 14.1 MeV generated in the muon-catalyzed nuclear fusion system S1 is radiated to thorium 232 as the nuclear raw material in the nuclear-reactor power generation system S2, and there can be achieved the nuclear fission reactor capable of initiating the decay chain of thorium 232 through the (n, 2n) and (n, 3n) reactions therein. This can result in establishing a composite power generation system obtained by combining nuclear fusion and fission capable of generating a nuclear reactor output beyond that of fusion neutrons, and thereby, a highly-efficient, safe, and small-sized sub-critical nuclear fission reactor without causing any radioactive wastes can be achieved.

The nuclear fission reactor can be electrically controlled through the muon-catalyzed nuclear fusion output, instead of mechanically controlling of a control rod or other mechanical control structures. The muon-catalyzed fusion is instantly terminated upon necessary termination of the muon-catalyzed fusion, and for this reason, there is no need to insert a control rod. The power generation method with high reliability as fail-safe can, therefore, be achieved.

The fuel fine pipes having LLFP sealed therein are appropriately arranged between the thorium-sealed pipes to perform power generation due to the (n, 2n) reaction etc. concurrently with the LLFP's lifetime-shortening and LLFP's amount-reduction. The reduction in amount and volume of LLFP having been accumulated due to the nuclear fission reactors up to the present time can also be proceeded.

### [OTHER EMBODIMENTS]

Through the muon-catalyzed nuclear fusion system S1, a DD-fusion reaction using deuterium gas as a raw material gas can also be handled.

### (Reference Numerals)

- 1: Muon generation unit
- 2: Laval nozzle
- 2a: Rectification portion
- 2b: Throat portion
- 2c: Reaction portion
- 3: Shock wave generator
- 4: Muon inlet window
- 5: Circulation-gas heat exchanger
- 6: Circulation-gas loop
- 7: High-pressure compressor
- 10: Reaction vessel
- 20: Structural partition
- 30: Fuel-holding portion (Blanket module)
- 31: Fuel fine pipe
- 40: Power generation unit
- 41: Pressurized-water jacket
- 42: Pressurizer
- 43: Steam generator
- 43a: Steam-supply pipe
- 43b: Water pipe
- 44: Power generation apparatus
- 45: Water-supply pump
- S: Power generation system
- G: Nuclear fusion reactor core
- N1: Muon beam
- S1: Muon-catalyzed nuclear fusion system (device)
- S2: Nuclear-reactor power generation system (device)

## Claims

1. A power generation system comprising:
a muon-catalyzed nuclear fusion device configured to undergo muon-catalyzed nuclear fusion; and
a nuclear-reactor power generation device configured such that a nuclear fuel therein is irradiated with neutrons generated as a result of muon-catalyzed nuclear fusion in the muon-catalyzed nuclear fusion device, thereby to carry out power generation,
wherein a pressurized-water nuclear reaction vessel in the nuclear-reactor power generation device is arranged so as to surround a nuclear fusion reactor core in which muon-catalyzed nuclear fusion occurs via a structural partition separating the muon-catalyzed nuclear fusion device from the nuclear-reactor power generation device.

2. The power generation system according to claim 1, wherein the nuclear fuel includes thorium 232 (²³²Th), thorium oxide (²³²ThO₂), or a mixture of thorium 232 and thorium oxide.

3. The power generation system according to claim 1 or 2, wherein the nuclear-reactor power generation device includes a fuel-holding portion, arranged so as to surround the nuclear fusion reactor core, for holding the nuclear fuel irradiated with fast neutrons emitted as a result of muon-catalyzed nuclear fusion thereby to undergo a nuclear fission reaction.

4. The power generation system according to claim 3, wherein the fuel-holding portion includes an assembly of fuel fine pipes for sealing the nuclear fuel molded into a pellet.

5. The power generation system according to any one of claims 1 to 4, further comprising: a long lived fission product (LLFP)-holding portion for arranging an LLFP in the pressurized-water nuclear reaction vessel.

6. The power generation system according to any one of claims 1 to 5, wherein the muon-catalyzed nuclear fusion device includes:
a muon generation unit configured to generate negative muons;
a gas supply unit configured to circulate and supply deuterium gas or deuterium-tritium mixture gas as a raw material gas; and
a Laval nozzle configured to accelerate the raw material gas supplied from the gas supply unit to supersonic velocity, wherein
the Laval nozzle has a shock wave generator arranged thereinside to undergo collision with the raw material gas accelerated to supersonic velocity thereby to generate an oblique shock wave,
the raw material gas is supplied from the gas supply unit into the Laval nozzle, then the supplied raw material gas is accelerated through the Laval nozzle to supersonic velocity, and then the accelerated raw material gas collides with the shock wave generator, and thereby the oblique shock wave is generated,
the oblique shock wave is converged on a center axis of the Laval nozzle so as to retain a high-density gas target in a gas phase, and
the negative muons are introduced from the muon generation unit into the high-density gas target thereby to cause a nuclear fusion reaction to occur.

7. A power generation method comprising the steps of:
irradiating a nuclear fuel arranged inside a pressurized-water nuclear reaction vessel in a nuclear fission reactor with neutrons generated as a result of muon-catalyzed nuclear fusion; while
causing a nuclear fission reaction within the nuclear fuel to occur, thereby to carry out power generation.

8. The power generation method according to claim 7, wherein the nuclear fission reaction within the nuclear fuel irradiated with neutrons is controlled by controlling the neutrons generated as a result of muon-catalyzed fusion.
